# EUROPÄISCHE PATENTSCHRIFT

(11) **EP 0 423 477 B1**
(45) Veröffentlichungstag und Bekanntmachung des Hinweises auf die Patenterteilung: **27.10.1993**
(21) Anmeldenummer: 90116708.0
(22) Anmeldetag: 31.08.1990
(51) Int. Cl.: F16B 31/02

(54) **Überwachungsvorrichtung für ein Verbindungselement**
Controlling device for a fastener
Installation de contrôle pour un accord

(30) Priorität: 20.10.1989 DE 3934952
(43) Veröffentlichungstag der Anmeldung: 24.04.1991
(73) Patentinhaber: AEG Westinghouse Transport-Systeme GmbH, D-13599 Berlin (DE)
(72) Erfinder: Steenbeck, Ulf, D-8011 Putzbrunn (DE); Bernhard, Johann, D-8000 München 80 (DE)
(74) Vertreter: Rüthning, Wolfgang

(56) Entgegenhaltungen:
- GB-A- 2 000 843
- US-A- 4 106 370
- SOVIET INVENTIONS ILLUSTRATED Sektion Mechanik, Woche E 18,16. Juni 1982, Zusammenfassung Nr. F2517/Q61, Derwent Publications Ltd.,London, GB; & SU - A - 846823 (G.A.GOLUBEV) 25.07.1981

## Beschreibung

Die Erfindung betrifft eine Überwachungsvorrichtung für ein unter Sollvorspannung eingebautes Verbindungselement, insbesondere für eine Schraubverbindung, wie sie im Oberbegriff des Anspruches 1 näher definiert ist.

Befestigungsschrauben werden normalerweise mit einem vorgegebenen Drehmoment angezogen, so daß die Schraubverbindung unter Last, vor allem bei einer dynamischen Beanspruchung, in der Einbaulage immer vorgespannt ist. Zum Schutz gegen ein ungewolltes Lockern und zur Sicherstellung der geforderten Vorspannung der Schraubverbindung werden häufig sogenannte Dehnschrauben und/oder auch Schraubensicherungen, wie Stopp-Muttern, Sicherungsbleche, Kronenmuttern und dgl., verwendet. Während sich bei der Erstmontage mit gewisser Sicherheit ein ordnungsgemäßer Einbauzustand der Schraubverbindung erreichen läßt, bereitet eine spätere periodische *) Überbeanspruchung verursachtes Versagen erhebliche Schwierigkeiten. So scheitert eine Kontrolle der Schraubverbindungen mit Hilfe eines Drehmomentenschlüssels häufig an der schlechten Zugänglichkeit der Schrauben bzw. Muttern in der Einbaulage, während andererseits zur Prüfung der Schraubenvorspannung geeignete Ultraschall-Meßmethoden nur an eigens für diesen Zweck verwendbaren Schraubverbindungen und nur mit Hilfe von Referenzmessungen an unbelasteten Schrauben durchführbar sind. In jedem Fall muß dabei die Schraubenvorspannung direkt am Einbauort jeder einzelnen Schraubverbindung überprüft werden, was bei sehr vielen Schrauben ein äußerst zeitaufwendiger und kostenintensiver Vorgang ist.

Durch die Patentanmeldung GB-A-2000 843 ist ein Lastindikator bekannt geworden, bei dem eine speziell ausgebildete fahnenartige Feder-Unterlegscheibe Verwendung findet. Die "Fahnenstange" der Unterlegscheibe bildet ein durch einen Schlitz getrenntes Armpaar, dessen Arme entsprechend einer Sollvorspannung z.B. gespreizt sind. Unter Belastung geht beim Erreichen der eingestellten Sollvorspannung die Spreizung gegen Null, und der richtige Zustand kann sovisuell oder unter Betätigungsmöglichkeit eines zusätzlichen Mikroschalters auch elektrisch überwacht werden. Ein solcher Lastindikator ist aufwendig, empfindlich und teuer, und seine räumliche Ausladung macht ihn für die Uberwachung von Schraubverbindungen nicht sonderlich geeignet.

Von einer solchen Überwachungsvorrichtung wird ausgegangen, wobei die Aufgabe darin besteht, eine Überwachungsvorrichtung der eingangs genannten Art zu schaffen, die auf baulich einfache Weise eine rasche problemlose Kontrolle des ordnungsgemäßen Einbauzustandes von Verbindungselementen, wie Befestigungsschrauben, Nieten oder dgl. selbst an schlecht zugänglichen Einbaustellen ermöglicht.Sie soll geeignet sein, für Anwendungsfälle, die eine wiederholte, sichere und problemlose Überprüfung der genannten Verbindungselemente mit sehr geringem baulichen und zeitlichen Aufwand erfordert.

Diese Aufgabe wird erfindungsgemäß durch die kennzeichnenden Merkmale des Anspruches 1 gelöst.

Die beim Einbau aufgebrachte Vorspannkraft des Verbindungselements, die an diesem selbst nur eine sehr geringe und dementsprechend schwer kontrollierbare Zugdehnung hervorruft, wird durch die im Zuge des das Verbindungselement umschließenden Reaktionskraftpfades miteingebaute Federanordnung aufgenommen und dort in einen im Vergleich zur Dehnbewegung des Verbindungselementes vielfach größeren Federweg umgesetzt. Dadurch wird in Verbindung mit dem zugeordneten federwegabhängig betätigten Schaltelement gewährleistet, daß durch eine einfache, ohne weiteres auch entfernt vom Einbauort durchführbare Abfrage der Schalterstellung rasch und mit hoher Zuverlässigkeit festzustellen ist, ob sich das Verbindungselement noch oder etwa in Folge eines Spannungsverlustes oder gar eines Bruchversagens nicht mehr im ordnungsgemäßen Einbauzustand befindet. Die Federkraft bei betätigtem Schaltelement soll im wesentlichen der Soll- Vorspannkraft des Verbindungselementes entsprechen, so daß der Schaltkontakt bei einem Sichlösen des Verbindungselementes, z.B. einer Schraubverbindung, zwar gleich zu Beginn in die unbetätigte Stellung umgeschaltet wird, die funktionsnotwendige Vorspannung des Verbindungselementes aber nicht gleichermaßen verlorengeht, sondern durch die Federanordnung noch in gewissem Umfang aufrechterhalten bleibt. Im Hinblick auf diesen sicherheitstechnischen Aspekt besitzt die Federanordnung gemäß Anspruch 2 in besonders bevorzugter Weise eine degressive, im Bereich zwischen der mindest zulässigen Vorspannkraft des Verbindungselementes und dem Umschaltpunkt des Schaltkontaktes relativ flach geneigte Federkennlinie. Dadurch wird erreicht, daß die Federanordnung bei einem ungewollten Lösen etwa einer Schraubverbindung nach dem Zurückschalten des Schaltkontaktes noch einen relativ großen Federweg zurücklegt, ohne daß die Federkraft und damit die Vorspannkraft stark abfällt. Weitere zweckmäßige Ausgestaltungen sind den weiteren Unteransprüchen entnehmbar.

Anhand der in den Zeichnungen dargestellten schematischen Ausführungsbeispiele wird die Erfindung im nachstehenden näher erläutert.

Es zeigen:
*)Überwachung der Schrauben auf ein evtl. vorzeitiges, durch
Fig. 1 eine Überwachungsvorrichtung für eine Befestigungsschraube, in der linken Bildhälfte im betätigten und in der rechten Bildhälfte im unbetätigten Zustand:
Fig. 2 eine abgewandelte Ausführungsform der Überwachungsvorrichtung, wiederum links im betätigten und rechts im unbetätigten Schaltzustand;
Fig. 3 ein Diagramm zur Darstellung des qualitativen Verlaufs der Federkennlinie;
Fig. 4 ein Ausführungsbeilspiel eines elektrischen Schaltkreises zur gleichzeitigen Überwachung mehrerer Verbindungselemente.

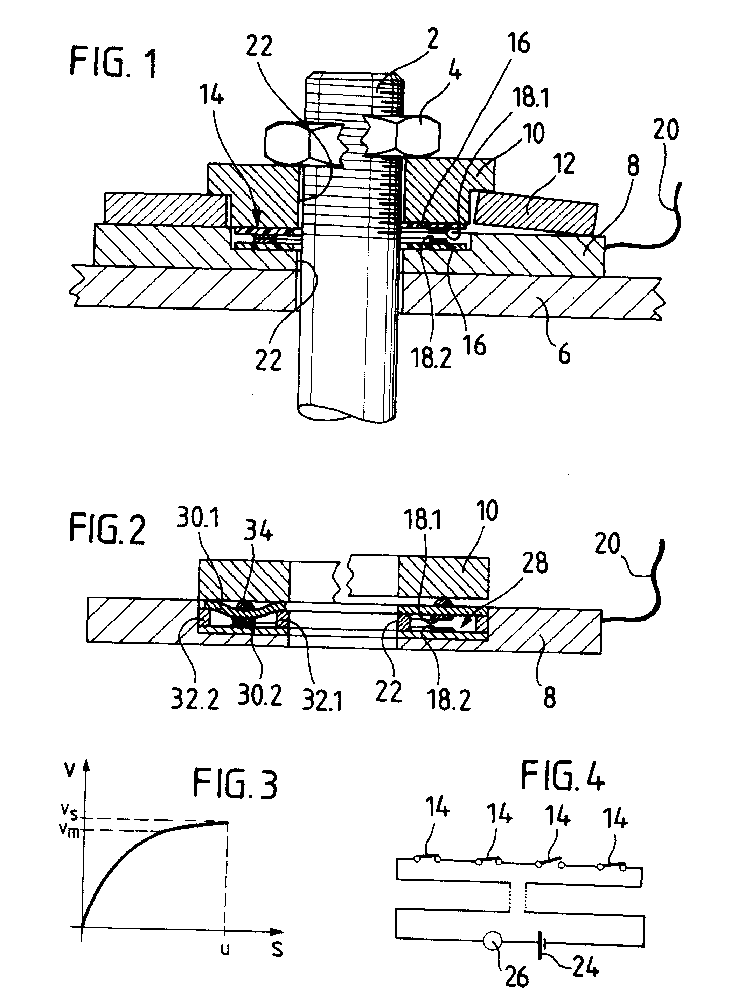

Die in Fig. 1 gezeigte Überwachungsvorrichtung dient zur Ermittlung des Einbauzustandes einer aus Schraubbolzen 2 und Mutter 4 bestehenden Schraubverbindung und enthält als Hauptbestandteile einen auf dem mit der Schraubverbindung 2, 4 zu befestigenden Bauteil 6 aufliegenden Grundkörpers 8, ein zwischen diesem und der Mutter 4 angeordnetes Druckstück 10, eine als Tellerfeder ausgebildete, zwischen Grundkörper 8 und Druckstück 10 wirksame und diese auseinanderdrückende Federanordnung 12 sowie einen elektrischen Schaltkontakt 14, bestehend aus zwei jeweils über eine Isolationsschicht 16 am Grundkörper 8 bzw. Druckstück 10 befestigten Kontaktstücken 18.1 und 18.2, die im Zuge einer nach außen führenden elektrischen Anschlußleitung 20 der Überwachungsvorrichtung liegen.

Wird die Mutter 4 beim Einbau der Schraubverbindung 2, 4 auf dem Schraubbolzen 2, der sich durch eine zentrale Durchgangsöffnung 22 des Grundkörpers 8 und des Druckstücks 10 erstreckt, festgezogen, so wird der Schraubbolzen 2 unter der Wirkung der Tellerfeder 12 zunehmend unter Vorspannung gesetzt. Da der Schaltkontakt 14 nicht in dem von der Mutter4 über das Druckstück 10, die Tellerfeder 12 und den Grundkörper 8 zum Bauteil 6 führenden, äußeren Kraftübertragungspfad liegt, sondern parallel zur Tellerfeder 12 angeordnet ist, macht der Schaltkontakte 14 zwar den Weg der Tellerfeder 12 mit, ist aber nicht der Feder- bzw. Schraubenvorspannkraft ausgesetzt. Die Feder 12 ist so bemessen, daß ihre maximale Federkraft der geforderten Soll-Vorspannkraft entspricht. Bei Erreichen der Sollvorspannung wird der Schaltkontakt 14 geschlossen und die Feder 12 ist plan auf den Grundkörper 8 gedrückt, d. h. Druckstück 10 und Grundkörper 8 sind unter Zwischenschaltung der Tellerfeder 12 auf Anschlag gefahren.

Läßt die Vorspannkraft in der Schraubverbindung 2, 4 nach, z. B. durch Lockern der Mutter 4, so wird das Druckstück 10 durch die Feder 12 nach oben gedrückt und dadurch werden die Kontaktstücke 18.1 und 18.2 voneinander getrennt, so daß der Schaltkontakt 14 öffnet. Die Größe der Vorspannkraft, die in der Schraubverbindung 2, 4 noch vorhanden ist, wenn der Schaltkontakt 14 beim Umschalten aus der Schließlage die voll geöffnete Stellung erreicht, wird durch die Federkennlinie festgelegt. Durch Verwendung einer Federanordnung 12 mit der in Fig. 3 gezeigten, degressiven Federkennlinie wird bewirkt, daß die Federkraft, ausgehend vom Umschaltpunkt U des Schaltkontaktes 14, wo die Federkraft der Soll-Vorspannung Vₛ entspricht, über einen relativ großen Federweg noch oberhalb der mindest zulässigen Vorspannkraft, Vₘ, verbleibt. Hierdurch wird eine hohe Ansprechempfindlichkeit der Überwachungsvorrichtung erreicht und verhindert, daß die Federkraft und damit die Vorspannkraft nicht bereits bei einem sich beginnenden Lockern der Mutter4 steil abfällt.

Zur gleichzeitigen Überwachung mehrerer Schraubverbindungen werden die diesen jeweils zugeordneten Schaltkontakte 14 auf die in Fig. 4 gezeigte Weise in Reihe geschaltet und deren Schaltzustand mit Hilfe eines einfachen, aus einer Stromquelle 24 und einem Anzeigegerät 26 bestehenden Prüfkreises ermittelt. Gewünschtenfalls läßt sich durch einen einzigen Meßvorgang auch feststellen, in welchem Schaltzustand sich jeder einzelne Schalter befindet und somit die gestörte Schraubverbindung selektiv lokalisieren, z.B. dadurch, daß parallel zu jedem Schaltkontakt 14 ein Widerstand geschaltet ist, dessen Widerstandwert sich von Schaltkontakt zu Schaltkontakt verdoppelt, und als Anzeigegerät 26 ein Ohmmeter verwendet wird.

Bei dem Ausführungsbeispiel gemäß Fig. 2 sind die Federanordnung 12 und der Schaltkontakt 14 zu einem einzigen, nach Art einer Unterlegscheibe ausgebildeten Überwachungselement 28 zusammengefaßt; im übrigen sind die Bau- und Funktionsweise und dementsprechend auch die Bezugszeichen die gleichen wie beim ersten Ausführungsbeispiel. Das Überwachungselement 28, das in einer Ausnehmung des Grundkörpers 8 angeordnet ist, besteht aus einer oberen und einer unteren Ringscheibe 30.1 und 30.2, an denen die Kontaktstücke 18.1 und 18.2 isoliert befestigt und die durch zwei schmale, zueinander konzentrische Anschlagringe 32.1 und 32.2 auf Abstand gehalten sind.

Die obere Ringscheibe 30.1 ist mit einer der Tellerfeder 12 gemäß Fig. 1 entsprechenden Federcharakteristik elastisch verformbar und wird bei einer Abwärtsbewegung des Druckstücks 10 über einen von der Ringscheibe 30.1 nach oben vorstehenden Druckring 34 zunehmend durchgebogen, bis die Federkraft gleichzeitig mit dem Schließen der Kontaktstücke 18.1 und 18.2 die Soll-Vorspannung erreicht, woraufhin ein weiterer Abwärtshub des Druckstücks 10 und damit eine weitergehende Durchbiegung der Ringscheibe 30.1 aufgrund derAnschlagwirkung der Abstandringe 30.1, 30.2 unterbunden wird. Das Überwachungselement 28 ist nach außen abgeschlossen, so daß es auch unter harten Umweltbedingungen eingesetzt werden kann, und so ausgebildet, daß zum Umschalten der Kontaktstücke 18.1, 18.2 ein möglichst kleiner Auslöseweg ausreicht.

## Patentansprüche

1. Überwachungsvorrichtung in einem unter Sollvorspannung eingebauten Verbindungselement, mit einer bis zur Höhe einer Sollvorspannkraft sich kontinuierlich-elastisch verformenden Federanordnung und einem Schaltelement, das bei entsprechendem Hub der Federanordnung umgesteuert wird, insbesondere in einer Schraubverbindung,
dadurch gekennzeichnet,
daß das Schaltelement (14, 28) isoliert angeordnet ist zwischen einem Grundkörper (8), der auf dem zu befestigenden Bauteil (6) aufliegt und einem Druckstück (10), auf das das Verbindungselement (2, 4) einwirkt, wobei beim Festziehen des Verbindungselementes (2, 4), dessen Bolzen (2) sich durch zentrale Durchgangsöffnungen (22) im Grundkörper (8), Druckstück (10) und Schaltelement (14,28) erstreckt, das Druckstück (10) gegen die Kraft der in einem äußeren Kraftübertragungspfad wirksamen Federanordnung (12, 30.1) bis zu einem wirksamen Anschlag (10', 32) bewegbar ist, bei dem die parallel zur Federanordnung (12, 30.1) bewegten, von der Vorspannung bzw. Federkraft entlastet en Kontakte des Schaltelementes (14, 28) schließen und die Sollvorspannung der Federanordnung (12, 30.1) erreicht ist.

2. Überwachungsvorrichtung nach Anspruch 1,
dadurch gekennzeichnet,
daß die Federanordnung (12, 30.1) eine degressive, im Bereich zwischen der mindestzulässigen Vorspannkraft (Vₘ) des Verbindungslementes (2, 4) und dem Umschaltpunkt (U) des Schaltelementes (14, 18) relativ flach geneigte Federkennlinie besitzt.

3. Überwachungsvorrichtung nach den Ansprüchen 1 oder 2,
dadurch gekennzeichnet,
daß das Schaltelement nach Art einer elastisch zusammendrückbaren Unterlegscheibe (28) mit einer zentralen Durchgangsöffnung (22) für das Verbindungselement und im Innenraum der Unterlegscheibe angeordneten Kontaktstücken (18.1, 18.2) ausgebildet ist (Fig. 2).

4. Überwachungsvorrichtung nach einem der vorhergehenden Ansprüche,
dadurch gekennzeichnet,
daß zur gleichzeitigen Kontrolle mehrerer Verbindungselemente (2, 4) die diesen zugeordneten Schaltelemente (14, 18) in einer gemeinsamen Überwachungsschaltung angeordnet sind (Fig. 4).

5. Überwachungsvorrichtung nach Anspruch 4,
dadurch gekennzeichnet,
daß die Schaltelemente (14, 18) im betätigten Zustand geschlossen und in Reihe geschaltet sind.

## Claims

1. Monitoring device in a connecting element installed with desired prestress, comprising a spring arrangement which deforms in continuously elastic manner up to the level of a desired prestress force and a switching element which is changed over on corresponding stroke of the spring arrangement, in particular in a screw connection, characterised thereby that the switching element (14, 28) is arranged insulated between a base body (8), which lies on the component (6) to be fastened, and a pressure member (10), on which the connecting element (2, 4) acts, wherein on tightening of the connecting element (2, 4), the bolt (2) of which extends through central passage openings (22) in the base body (8), pressure member (10) and switching element (14, 28), the pressure member (10) is movable against the force of the spring arrangement (12, 30.1), which is effective in an outerforce transmission path, up to an effective abutment (10', 32), at which the contacts, which are moved parallel to the spring arrangement (12, 30.1) and relieved by the prestress or spring force, of the switching element (14, 28) close and the desired prestress of the spring arrangement (12, 30.1) is obtained.

2. Monitoring device according to claim 1, characterised thereby that the spring arrangement (12, 30.1) possesses a degressive spring characteristic which is relatively flatly inclined in the region between the minimum permissible prestress force (Vₘ) of the connecting element (2, 4) and the switching point (U) of the switching element (14, 18).

3. Monitoring device according to claim 1 or2, characterised thereby that the switching element is constructed in the manner of a resiliently compressible supporting disc (28) with a central passage opening (22) for the connecting element, and contact members (18.1, 18.2) arranged in the interior space of the supporting disc. (Fig. 2)

4. Monitoring device according to one of the preceding claims, characterised thereby that for the purpose of simultaneous checking of a plurality of connecting elements (2, 4) the switching elements (14, 18) associated therewith are arranged in a common monitoring circuit (Fig. 4)

5. Monitoring device according to claim 4, characterised thereby that the switching elements (14, 18) are closed in the actuated state and are connected in series.

## Revendications

1. Dispositif de surveillance dans un élément de liaison monté sous prétension de consigne, avec un agencement à ressort qui se déforme de manière continue et élastique jusqu'à la hauteur d'une force de prétension de consigne et un élément de circuit qui est inversé pour une course correspondante de l'agencement à ressort, en particulier dans une liaison à vis, caractérisé en ce que l'élément de circuit (14, 28) est agencé de manière isolée entre un corps de base (8) qui repose sur l'élément à fixer (6) et un membre de pression (10) sur lequel agit l'élément de liaison (2, 4), et lorsque l'élément de liaison (2, 4) est serré, son boulon (2) traverse des ouvertures de passage centrales (22) dans le corps de base (8), le membre de pression (10) et l'élément de circuit (14, 28), le membre de pression (10) est mobile, à l'encontre de la force de l'agencement à ressort (12, 30.1) actif dans une voie de transmission de force externe, jusqu'à une butée active (10', 32) au niveau de laquelle les contacts de l'élément de circuit (14, 28) déplacés parallèlement à l'agencement à ressort (12, 30.1) et débarrassés de la prétension ou de la force du ressort se ferment et la prétension de consigne de l'agencement à ressort (12, 30.1) est atteinte.

2. Dispositif de surveillance selon la revendication 1, caractérisé en ce que l'agencement à ressort (12, 30.1) possède une courbe caractéristique de ressort dégressive, inclinée de manière relativement aplatie dans le domaine compris entre la plus faible force de prétension admissible (Vₘ) de l'élément de liaison (2, 4) et le point d'inversion (U) de l'élément de circuit (14, 18).

3. Dispositif de surveillance selon la revendication 1 ou 2, caractérisé en ce que l'élément de circuit est sous forme d'un rondelle (28) susceptible d'être écrasée de manière élastique, comportant une ouverture de passage centrale (22) pour l'élément de liaison et des membres de contact (18.1, 18.2) agencés dans la cavité interne de la rondelle (figure 2).

4. Dispositif de surveillance selon l'une des revendications précédentes, caractérisé en ce que, pour le contrôle simultané de plusieurs éléments de liaison (2, 4), les éléments de circuit (14, 18) qui leur sont associés sont agencés dans un circuit de surveillance commun (figure 4).

5. Dispositif de surveillance selon la revendication 4, caractérisé en ce que les éléments de circuit (14, 18) sont fermés à l'état actionné et sont branchés en série.
